(19) Europäisches Patentamt
European Patent Office
Office européen des brevets

(11) **EP 3 647 883 B1**

(12) **FASCICULE DE BREVET EUROPEEN**

(45) Date de publication et mention
de la délivrance du brevet:
**01.01.2025 Bulletin 2025/01**

(21) Numéro de dépôt: **18204358.8**

(22) Date de dépôt: **05.11.2018**

(51) Classification Internationale des Brevets (IPC):
**G04D 7/08** (2006.01)      **G04D 7/12** (2006.01)
**G04B 17/06** (2006.01)

(52) Classification Coopérative des Brevets (CPC):
**G04B 17/063; G04D 7/088; G04D 7/1292**

(54) **BALANCIER D'UNE PIECE D'HORLOGERIE**

**UNRUH EINER UHR**

**TIMEPIECE BALANCE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**06.05.2020 Bulletin 2020/19**

(73) Titulaire: **CSEM
Centre Suisse d'Electronique et de Microtechnique SA
2002 Neuchâtel (CH)**

(72) Inventeurs:
• **LANI, Sébastien
3210 Kerzers (CH)**
• **MAIER, Frédéric
2000 Neuchâtel (CH)**
• **DUPAS, Emmanuel
1608 Chapelle (CH)**
• **CONUS, Thierry
2543 Lengnau (CH)**

(74) Mandataire: **ICB SA
Faubourg de l'Hôpital, 3
2001 Neuchâtel (CH)**

(56) Documents cités:
**WO-A1-2018/015071      CH-A2- 705 928**

## Description

<u>Domaine technique et état de l'art</u>

L'invention se rapporte à un balancier d'une pièce d'horlogerie ainsi qu'à un procédé de réglage de la marche de la pièce d'horlogerie.

<u>Arrière-plan de l'invention</u>

Dans une pièce d'horlogerie un résonateur comprend classiquement un balancier-spiral. Ce balancier-spiral est le véritable cœur des mouvements mécaniques dans les pièces d'horlogerie puisqu'il régule la marche du temps grâce à ses oscillations et est responsable de la précision de telles pièces. La période d'oscillation d'un balancier-spiral dépend en particulier de l'inertie du balancier et de la rigidité du spiral. Cette période est affectée par de nombreux phénomènes secondaires, notamment par la variation de rigidité du spiral en fonction de la température, par les variations des frottements de l'air sur le balancier, par l'existence d'un balourd sur le balancier ou encore par les jeux existants au niveau des pivots de l'axe du balancier-spiral. Il est généralement toléré d'une pièce d'horlogerie équipée d'un mouvement mécanique une déviation de l'ordre de quelques secondes par jour cependant tous les phénomènes secondaires précités doivent être maîtrisés scrupuleusement lors de la fabrication du résonateur ou encore d'emboîtage du mouvement horloger.

Traditionnellement, l'inertie et le balourd du balancier sont ajustés, en enlevant de la matière par usinage au cours de plusieurs étapes de mesure et d'usinage successives afin de resserrer au maximum les courbes d'isochronisme du résonateur. Il a été toutefois constaté que la marche change sensiblement au moment de l'emboîtage du mouvement à cause des contraintes générées sur le mouvement par l'emboîtage ou encore du fait de modifications aérodynamiques induites par un environnement fermé de la boîte. Il est donc nécessaire d'effectuer un dernier réglage pour ajuster de manière précise la marche du mouvement après emboîtage de ce mouvement. Ce dernier réglage peut se faire de différentes façons, en particulier par un réglage de la position de masselottes agencées sur le balancier, par un réglage de la longueur active du spiral au moyen d'un système de raquetterie, par l'ablation de matière du balancier au moyen d'une source laser ou encore par l'ajout de matière par projection sur le balancier.

Ces différentes façons de procéder à ce dernier réglage présentent toutefois plusieurs inconvénients.

Par exemple, le réglage de la position des masselottes ou de la longueur active du spiral est une opération délicate pour un opérateur et difficile à automatiser. Par ailleurs, le système de raquetterie est susceptible de se dérégler au cours du temps, notamment en cas de choc. L'ablation de matière par laser dégrade l'aspect esthétique du balancier et peut provoquer des dépôts de matière calcinée dans le mouvement. Enfin, l'ajout de matière par projection de la matière sous forme liquide selon un procédé automatisé réalisé notamment par une imprimante du type Aerosol Jet peut provoquer des éclaboussures, résultant de l'impact de la matière sur le balancier, qui peuvent se répandre et contaminer le mouvement horloger.

Le document WO2018015071 A1 décrit un balancier horloger dans lequel des évidements évasés sont pratiqués pour accueillir des masses de matière.

<u>Résumé de l'invention</u>

Un but de l'invention est par conséquent de proposer un balancier d'un résonateur du type balancier-spiral adapté pour un réglage précis de la marche du mouvement par projection de matière et optimisé pour pallier notamment le problème des éclaboussures pouvant se répandre dans le mouvement.

Un autre but de l'invention est de proposer un procéder de réglage d'une pièce d'horlogerie comportant un résonateur équipé du balancier selon l'invention.

Dans ce dessein, l'invention concerne un balancier d'une pièce d'horlogerie comprenant une face de réglage pourvue d'au moins un évidement prévu pour recevoir une matière projetée pour une réalisation d'un réglage de la marche de ladite pièce d'horlogerie par la modification de l'inertie et du balourd du balancier, ledit évidement comprenant une ouverture et un fond, dans ce balancier :

- ledit fond étant tout au plus partiellement visible d'une position définie au-dessus de ladite ouverture notamment sur un axe central de l'ouverture.

Dans d'autres modes de réalisation :

- l'ouverture est configurée dans la face de réglage relativement au fond dudit évidement rendant ledit fond tout au plus partiellement visible de ladite position ;
- l'ouverture comprend un bord définissant une surface qui est inférieure ou sensiblement inférieure à une surface du fond de l'évidement ;
- l'évidement s'étend selon une direction formant avec l'axe central de l'ouverture un angle aigu ;
- l'évidement présente une section transversale verticale de forme essentiellement évasée, rectangulaire ou encore circulaire ;
- l'évidement présente une section transversale verticale de forme essentiellement rectangulaire, carrée, circulaire, ou encore trapézoïdale ;
- l'évidement comprend une paroi interne pourvue d'un renflement s'étendant sensiblement horizontalement ou horizontalement en tout ou partie sur une portion d'une surface de ladite paroi ;
- balancier comprend une serge, un moyeu destiné à être monté pivotant sur un axe de balancier, et au moins un bras reliant la serge au moyeu, la serge du balancier comportant ledit au moins un évidement ;

- balancier comprend plusieurs bras dont au moins un comprend ledit au moins un évidement ;
- plusieurs évidements sont répartis de manière régulière ou irrégulière sur le pourtour de la serge, et
- au moins trois évidements sont repartis régulièrement sur le pourtour de la serge, chaque évidement s'étendant selon un arc de cercle d'un angle variant entre 20° et 90°, de préférence entre 40° et 60°.

L'invention concerne aussi un procédé de réglage de la marche d'une pièce d'horlogerie comprenant ce balancier, le procédé comportant les étapes suivantes :

- mesure de la marche de la pièce d'horlogerie ;
- détermination d'une valeur de correction à appliquer à l'inertie et/ou au balourd du balancier pour obtenir une marche corrigée de ladite pièce d'horlogerie, et
- application d'une matière dans un ou plusieurs évidements agencés sur le balancier afin de modifier l'inertie du balancier selon ladite valeur de correction.

Avantageusement, l'étape d'application comprend une sous-étape de projection de la matière dans un ou plusieurs de ces évidements.

En particulier, la sous-étape de projection comprend une phase de projection sélective de la matière dans un ou plusieurs de ces évidements.

Avantageusement encore, lors de la sous-étape de projection un ou plusieurs types de matière sont projetés sur le balancier.

En outre, le procédé comprend une étape d'agencement d'un mouvement horloger comprenant le balancier dans une carrure d'une boîte de la pièce d'horlogerie.

L'invention concerne également une pièce d'horlogerie comportant un tel balancier.

Description sommaire des dessins

D'autres particularités et avantages ressortiront clairement de la description qui en est faite ci-après, à titre indicatif et nullement limitatif, en référence aux figures annexées, dans lesquelles :

- la figure 1 est une vue de dessus d'un balancier comportant trois évidements, selon un mode de réalisation de l'invention ;
- la figure 2 est une vue de dessus du balancier comportant quatre évidements, selon le mode de réalisation de l'invention ;
- les figures 3 à 6 représentent des premières variantes de l'évidement comprenant chacune un fond qui est tout au plus partiellement visible d'une position définie au-dessus d'une ouverture de cet évidement, selon le mode de réalisation de l'invention ;

- les figures 7 et 8 représentent des variantes non comprises dans l'invention.
- les figures 9 et 10 représentent des deuxièmes variantes de l'évidement comprenant chacune un fond présentant un écart avec une ouverture de cet évidement qui est supérieur ou sensiblement supérieur à la plus grande dimension géométrique dudit fond, selon des variantes qui ne sont pas comprises dans l'invention telle que revendiquée ;
- la figure 11 représente une pièce d'horlogerie comprenant un tel balancier, selon le mode de réalisation de l'invention ;
- la figure 12 représente un logigramme relatif à un procédé de réglage de la marche de la pièce d'horlogerie, selon le mode de réalisation de l'invention, et
- la figure 13 est une vue de dessus du balancier comportant deux bras et quatre évidements, selon le mode de réalisation de l'invention.

Description détaillée des modes de réalisation préférés

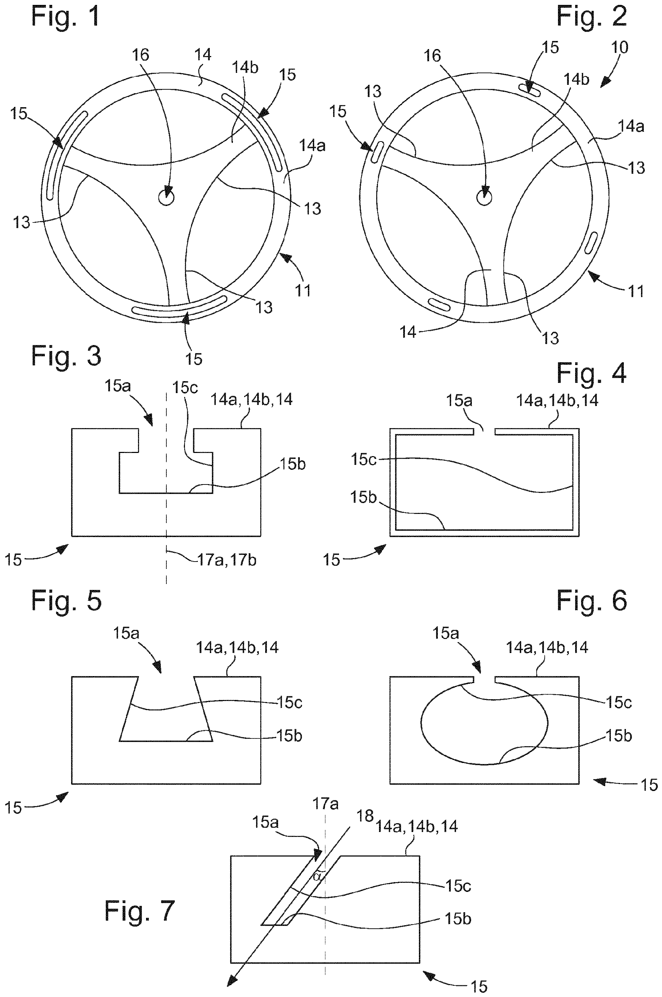

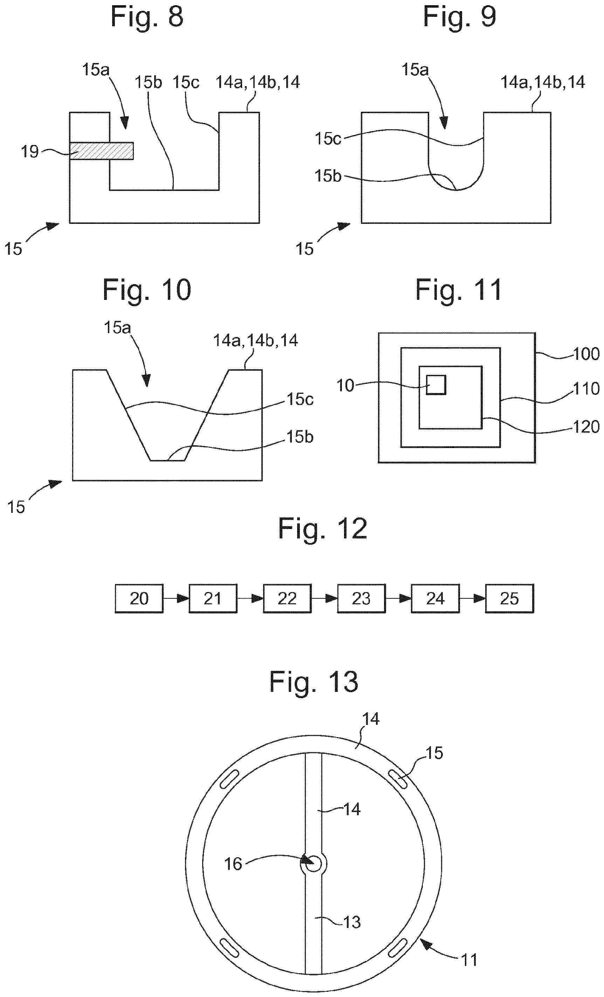

En référence aux figures 1 à 10 et 13, l'invention porte sur un balancier 10 d'un résonateur 120 du type balancier-spiral d'un mouvement horloger 110 d'une pièce d'horlogerie 100 visible sur la figure 11. Un tel balancier 10 est pourvu d'au moins un évidement 15 prévu pour recevoir une matière projetée pour une réalisation d'un réglage de la marche de la pièce d'horlogerie 100 et donc de son mouvement 110. Un tel évidement 15 du balancier 10 encore appelé gorge ou cavité, est adapté pour recevoir une projection de matière au cours d'un procédé de réglage de la marche de cette pièce d'horlogerie 100 décrit par la suite.

A cet effet sur les figures 1, 2 et 13, le balancier 10 comporte une serge 11, un moyeu 12 destiné à être monté pivotant sur un axe de balancier 16, et un ou plusieurs bras 13, par exemple deux, trois ou quatre bras 13, reliant la serge 11 au moyeu 12. Le balancier 10 comprend une face de réglage 14 qui est plane ou sensiblement plane, et s'étendant dans un plan orthogonal à l'axe de balancier 16. Cette face de réglage 14 est orientée vers le fond du boîtier de la pièce d'horlogerie 100 lorsque le balancier 10 est compris dans un mouvement horloger 110 qui est monté dans ce boîtier. Cette face de réglage 14 comprend une première partie 14a comprise/définie dans la serge 11 du balancier 10 et une deuxième partie 14b dans les bras 13 de ce balancier 10.

Ainsi que nous l'avons déjà évoqué, le balancier 10 comprend au moins un évidement 15. Un tel évidement 15 peut être une gorge, une cavité ou encore une structure concave, en étant pourvu d'une ouverture 15a, d'un fond plein 15b pouvant avoir une surface sensiblement plane ainsi que d'une paroi interne 15c reliant ladite ouverture 15a audit fond 15b. Un fond plein doit être entendu ici comme étant un fond dépourvu d'ouverture/-d'orifice. Dans une variante, cet évidement 15 peut être traversant en formant un trou traversant comprenant alors une ouverture et un fond formant/comprenant en tout ou partie un orifice/une ouverture. L'évidement 15 peut être défini dans la serge 11 ou l'un des bras 13 du balancier 10. Lorsque le balancier 10 comporte plusieurs évidements 15, ceux-ci peuvent être répartis uniquement dans les bras 13 de ce balancier 10 ou uniquement dans la serge 11 ou alors dans les bras 13 et la serge 11 de ce balancier 10. Alternativement, lorsque le balancier 10 comprend un évidement 15 celui-ci peut être défini dans la face de réglage 14 sur tout le contour de la serge 11. Cette dernière configuration permet notamment d'assurer un réglage de la marche du mouvement par une correction plus efficace du balourd du balancier du fait que dans ce contexte le mouvement est déjà en position verticale pour les mesures de marche donc moins de manipulations. De plus, l'effet de la correction apportée est accentué en comparaison avec un balancier dont le ou les évidements sont définis dans d'autres parties de la face de réglage 14 de la serge 11, car dans cette alternative le dépôt de matière est effectué au plus loin de l'axe de rotation du balancier avec en plus moins de matière ajoutée pour une même correction ou une obtention d'une correction plus importante pour la même quantité de matière ajoutée.

Un tel évidement 15 peut être réalisé dans le balancier 10 à partir d'opérations de fraisage et/ou de gravure profonde par laser. Cet évidement 15 peut aussi être réalisé lors d'une opération de fabrication en trois dimensions du balancier 10 (par exemple par impression ou gravure DRIE, ou encore insolation laser et gravure humide) ou encore de la serge ou des bras qui le constituent ou encore à partir d'une opération d'assemblage de deux couches de pièces dont l'une comporte un trou traversant. Cette opération d'assemblage peut mettre en œuvre une technique du type « wafer bonding » ou encore des procédés de gravure ionique réactive profonde double face, de soudure par ultrasons ou de chassage par goupilles ou encore de vissage, etc...

Dans des exemples illustrés sur les figures 1 et 2 où des évidements 15 sont définis uniquement dans la partie 14a de la face de réglage 14 du balancier 10, c'est-à-dire uniquement dans la serge 11, cette dernière comporte alors plusieurs ouvertures 15a donnant accès à un volume intérieur des évidements 15 correspondants. Dans cette configuration, chaque évidement 15 et donc chaque volume intérieur correspondant, est destiné à recevoir une projection de matière afin de modifier l'inertie du balancier 10. De manière non limitative, cette matière projetée peut être à l'état liquide, pâteux ou solide et peut comprendre une colle, une peinture ou une suspension de métal. Une telle matière est dans le présent mode de réalisation de préférence une matière sous forme/à l'état liquide. On notera de plus que cette matière peut être durcissable lorsqu'elle est exposée par exemple à une source froide ou encore à une source de chaleur susceptible de coopérer avec un dispositif de ventilation. De manière alternative, lorsque cette matière projetée est à l'état solide en comprenant par exemple une encre comportant de l'argent, du tungstène ou encore du carbure de tungstène sous forme de flocons ou de morceaux, elle ne requiert aucun traitement ultérieur particulier après sa projection sur le balancier 10.

Sur figure 1, la serge 11 comporte plusieurs évidements 15, par exemple trois évidements 15, répartis sur le pourtour de la serge 11 défini dans la partie 14a de la face de réglage 14. Chaque évidement 15 s'étend selon un arc de cercle d'un angle compris par exemple entre 5° et 120° et de préférence compris entre 30° et 60°. Sur la figure 2, la serge 11 comporte une multitude d'évidements 15, par exemple quatre évidements 15 ou plus, qui sont répartis sur le pourtour de cette serge 11. Ces évidements 15 s'étendent selon un arc de cercle d'un angle inférieur à 90° et de préférence inférieur à 5°.

Dans ces deux formes d'exécution, les évidements 15 peuvent par exemple être répartis sur ce pourtour de la serge 11 du balancier 10 de manière régulière de sorte à obtenir une distribution symétrique de la matière projetée dans tous les évidements ou certains d'entre eux afin de modifier l'inertie du balancier 10 sans modifier son centre de masse au cours du dernier réglage contribuant ainsi à ajuster de manière précise la marche du mouvement 110. Les évidements 15 selon les deux formes d'exécution précitées peuvent, selon un autre exemple, être répartis sur le pourtour de la serge 11 de manière asymétrique afin de modifier l'inertie du balancier 10 et son centre de masse par projection de matière dans tous les évidements asymétriques ou certains d'entre eux. Dans un autre exemple, les évidements 15 du balancier 10 sont répartis de manière symétrique sur la serge 11 du balancier 10 et la matière peut être projetée uniquement dans certains de ces évidements 15 qui présentent une configuration asymétrique les uns par rapport aux autres.

De manière avantageuse, l'évidement 15 présente une forme spécifique de sorte à contenir dans son volume intérieur d'éventuelles éclaboussures résultant de l'impact de la matière projetée contre son fond 15b et empêcher ainsi la contamination du mouvement horloger 110 au cours d'un dernier réglage nécessaire pour ajuster de manière précise la marche du mouvement une fois celui-ci agencé/chassé dans une carrure de la pièce d'horlogerie 100.

Les évidements 15 dans ce balancier 10 présentent une forme générale concave et peuvent être de deux types selon qu'elles appartiennent à une première ou une deuxième variante d'évidement 15. Dans la première variante d'évidement 15 visible sur les figures 3 à 6 le fond 15b de ce dernier est tout au plus partiellement visible d'une position définie au-dessus de son ouverture 15a. La position est ici « un point de vue » qui est agencé au-dessus de la face de réglage 14 du balancier 10 et préférentiellement sur un axe central 17a de l'ouverture 15a visible sur la figure 3. Cette position est similaire à celle d'un orifice de sortie d'un dispositif prévu pour projeter la matière dans cet évidement 15. On comprend donc que la réalisation d'un tel évidement 15 peut prévoir donc de configurer l'ouverture 15a relativement au fond 15b correspondant de l'évidement 15.

Dans la variante des figures 3 à 6, l'ouverture 15a de cet évidement 15 peut comprendre un bord définissant un espace d'accès comprenant une surface qui est inférieure ou sensiblement inférieure à une surface du fond 15b de l'évidement 15. Dans cette configuration, les axes centraux 17a, 17b du fond 15b et de l'ouverture 15a et donc de leurs surfaces respectives, sont de préférence confondus. Ainsi une partie plus ou moins grande du fond 15b de l'évidement 15 est alors masqué par le bord de l'ouverture 15a. Dans une autre variante illustrée sur la figure 7, l'évidement 15 s'étend selon une direction 18 formant avec l'axe central 17a de l'ouverture 15a un angle α aigu. Autrement dit, l'ouverture 15a de cet évidement 15 est agencée de manière décalée par rapport au fond 15b de manière à ce que ce fond 15b soit tout au plus partiellement visible de la position définie au-dessus de cette ouverture 15a. Dans cette configuration, les axes centraux 17a, 17b du fond 15b et de l'ouverture 15a et donc de leurs surfaces respectives, sont non-confondus. Dans une autre variante non comprise dans l'invention telle que revendiquée et visible sur la figure 8, l'évidement 15 comprend une paroi interne 15c pourvue d'un renflement 19 s'étendant sensiblement horizontalement ou horizontalement en tout ou partie sur une portion d'une surface de ladite paroi 15c. Ce renflement 19 peut être venu de matière avec la paroi interne 15c ou être une pièce rapportée (par exemple une vis) agencée dans le volume intérieur de l'évidement 15. On comprend que ce renflement 19 est défini pour occulter/masquer partiellement le fond 15b de l'évidement 15 afin que ce fond 15b soit tout au plus partiellement visible de la position définie au-dessus de cette ouverture 15a.

Dans cette première variante, l'évidement 15 présente une section de forme essentiellement rectangulaire, carrée, circulaire, ou encore trapézoïdale. Cette section autrement appelée section transversale verticale est comprise dans un plan transversal vertical qui est perpendiculaire à la face de réglage 14 du balancier 10.

Dans une autre variante non comprise dans l'invention telle que revendiquée et visible sur les figures 9 et 10, le fond 15b présente un écart avec ladite ouverture 15a qui est supérieur ou sensiblement supérieur à la plus grande dimension géométrique de son fond 15b. Cet écart correspond à la profondeur de l'évidement 15 et la plus grande dimension géométrique peut être ici une longueur lorsque ce fond 15b à une forme essentiellement rectangulaire ou encore un diamètre si la forme de ce fond 15b est substantiellement circulaire. Dans cette variante, l'évidement 15 présente une section transversale verticale de forme essentiellement évasée, rectangulaire ou encore circulaire.

On notera que la forme de la section de ces deux variantes de l'évidement 15 participe notamment à :

- confiner les éclaboussures éventuelles subséquentes à la projection de matière ;
- définir géométriquement la position du dépôt de matière sur la face de réglage 14 ;
- améliorer l'esthétique du dépôt de matière sur la face de réglage 14 ;
- faciliter l'adhérence du dépôt de matière sur la face de réglage 14, indépendamment de la préparation de face de réglage 14 ;
- protéger le dépôt de matière d'éventuels coups de brucelles qui peuvent survenir lors des manipulations du mouvement horloger 110.

Dans ce contexte, l'évidement 15 débouche sur la face de réglage 14 du balancier 10, cette face 14 étant destinée à être agencée en regard du fond du boîtier de la pièce d'horlogerie 100 lorsque que le mouvement horloger 110 est monté dans ce boîtier. Selon cet agencement, il est par conséquent possible de faire un dernier réglage de la marche du mouvement horloger 110 lorsqu'il est monté dans la carrure de la pièce d'horlogerie 100, avant l'assemblage du fond du boîtier avec la carrure, en ajustant le dispositif de projection de matière au-dessus du balancier 10 tout en s'assurant que la masse oscillante de cette pièce d'horlogerie 100 est dégagée du résonateur du mouvement 110 pour un mouvement du type automatique. Le dispositif de projection de matière peut par exemple être une imprimante du type Aerosol Jet qui autorise une projection très précise avec un très faible volume de matière.

En référence à la figure 12, l'invention concerne également un procédé de réglage de la marche du mouvement horloger 110. Ce procédé comprend une étape d'agencement 20 du mouvement horloger 110 comprenant le balancier 10 dans la carrure de la boîte de la pièce d'horlogerie 100. Par la suite le procédé prévoit une étape de mesure 21 de la marche de ce mouvement horloger 110 ainsi disposé dans la carrure. Cette mesure peut être réalisée de préférence sans contact étant donné que l'accès au résonateur est particulièrement étroit. De manière connue, la mesure de la marche du mouvement peut ainsi être réalisée, par exemple, sous forme optique ou acoustique. Cette étape de mesure 21 permet de comparer la marche mesurée avec une marche souhaitée. D'autre part, elle permet également de connaître le battement du balancier 10 afin de pouvoir le synchroniser avec la projection de matière pour déposer précisément la matière dans l'évidement 15 ou dans chaque évidement 15 du balancier 10.

Le procédé comprend ensuite une étape de détermination 22 de la valeur de correction à appliquer à l'inertie du balancier 10 pour obtenir une marche corrigée. Cette valeur de correction est déterminée par les formules connues suivantes :

Pour un résonateur du type balancier-spiral, le moment d'inertie *I* du balancier répond à la formule :

$$I = mr^2 \qquad (1)$$

dans laquelle m représente la masse du balancier 10 et $r$ son rayon de giration qui dépend également de la température par l'intermédiaire du coefficient de dilatation du balancier 10.

De plus, le couple élastique C du spiral à section constante répond à la formule :

$$C = \frac{Ehe^3}{12L} \qquad (2)$$

dans laquelle E est le module de Young du matériau utilisé, h sa hauteur, e son épaisseur et L sa longueur développée.

Enfin, la fréquence $f$ du résonateur 120 comprenant le balancier-spiral répond à la formule:

$$f = \frac{1}{2\pi}\sqrt{\frac{C}{I}} \qquad (3)$$

Ensuite, ce procédé comprend une étape d'application 23 de la matière dans un ou plusieurs évidements du balancier 10 afin de modifier l'inertie du balancier 10 selon la valeur de correction. Le ou les évidements 15 peuvent se trouver soit uniquement sur la serge 11 ou au moins un bras 13, soit sur la serge 11 et sur un ou plusieurs bras 13 du balancier 10 ou soit dans le contour de la serge 11 défini dans la face de réglage . Une telle étape 23 comprend une sous-étape de projection 24 de la matière dans un ou plusieurs évidements du balancier 10. Cette sous-étape 24 permet d'éviter tout contact mécanique avec le balancier 10 dans le cadre du réglage de la marche.

On notera que cette sous-étape de projection 24 peut être précédée d'une sous-étape de retrait du balancier 10 du mouvement horloger 100 par exemple lorsque ce balancier 10 comprend un ou plusieurs évidements 15 correspondant au trou traversant. Dans ce contexte, la projection de matière dans ce trou traversant est alors réalisée hors du mouvement 110 avec l'utilisation :

- d'un support appliqué par exemple sur une face du balancier 10 comportant le fond de cet évidement 15 pourvu de l'orifice et/ou
- d'une matière projetée présentant un indice de viscosité élevé.

Étant donné que le réglage de la marche selon ce procédé ne permet que l'augmentation de l'inertie du balancier 10, le balancier 10 est fabriqué de sorte à avoir un déficit de masse afin que le mouvement horloger 110 présente une avance de marche qui sera corrigée au cours de cette sous-étape de projection 24 de matière dans tous les évidements 15 de ce balancier 10 ou dans certains d'entre eux.

Selon une forme d'exécution, la valeur de correction peut correspondre à une projection de la matière dans plusieurs évidements 15 du balancier 10 de sorte à obtenir une distribution symétrique de la matière projetée afin de modifier l'inertie du balancier 10 sans modifier son centre de masse. Dans ce cas, les évidements du balancier 10 sont répartis de manière symétrique notamment sur la serge 11 du balancier 10 et la quantité de matière projetée est identique pour chaque évidement 15 afin de ne pas créer de balourd.

Selon une forme d'exécution, la valeur de correction est déterminée en comparant, d'une part, la marche mesurée et, d'autre part, le balourd et la fréquence souhaités pour le résonateur 120. Dans ce cas, la valeur de correction correspond à la distribution asymétrique de l'ajout de matière par projection dans des évidements 15 du balancier 10 répartis de manière symétrique sur la serge 11 du balancier 10. Alternativement, les évidements 15 du balancier 10 sont répartis de manière symétrique sur la serge 11 du balancier 10 et la matière est projetée uniquement dans certains de ces évidements 15 qui présentent une configuration asymétrique les uns par rapport aux autres. Dans un tel contexte, la sous-étape de projection 24 comprend une phase de projection sélective de la matière dans un ou plusieurs de ces évidements 15.

En complément, on notera que lors de la sous-étape de projection 24 un ou plusieurs types de matière sont projetés sur le balancier 10. Ainsi les évidements 15 d'un même balancier 10 peuvent :

- comprendre la même matière projetée, ou
- comprendre chacune une matière projetée différente de celles de tous les autres évidements de ce balancier 10 ou d'au moins un des autres évidements 15 de ce balancier 10.

Bien que la sous-étape de projection 24 puisse être avantageusement réalisée en utilisant une imprimante Aerosol Jet, toute autre technologie de projection ou d'impression sans masque est également possible. Ainsi que nous l'avons déjà évoqué, la matière déposée dans tous les évidements 15 ou dans certains d'entre eux peut comporter une colle, une peinture ou une suspension de métal.

Préférentiellement, la sous-étape de projection 24 de matière peut être suivie d'une sous-étape de solidification 25 de la matière projetée et ce, notamment si la matière est à l'état liquide ou pâteux. Cette sous-étape 25 peut, suivant la matière utilisée, consister à évaporer un solvant, thermo-durcir la matière ou réticuler la matière dans l'évidement. Un polymère peut également être déposé dans l'évidement 15 ou chaque évidement 15 du balancier 10 puis réticulé au moyen d'un rayonnement ultra-violet.

## Revendications

1. Balancier (10) d'une pièce d'horlogerie (100) comprenant une face de réglage (14) pourvue d'au moins un évidement (15) prévu pour recevoir une matière projetée pour une réalisation d'un réglage de la marche de ladite pièce d'horlogerie (100) par la modification de l'inertie et du balourd du balancier (10), ledit évidement (15) comprenant une ouverture (15a) et un fond (15b), **caractérisé en ce que** ledit fond (15b) est tout au plus partiellement visible d'une position définie au-dessus de ladite ouverture (15a).

2. Balancier (10) selon la revendication 1, **caractérisé en ce que** l'ouverture (15a) est configurée dans la face de réglage (14) relativement au fond (15b) dudit évidement (15) rendant ledit fond (15b) tout au plus partiellement visible de ladite position.

3. Balancier (10) selon l'une quelconque des revendications 1 et 2, **caractérisé en ce que** l'ouverture (15a) comprend un bord définissant une surface qui est inférieure ou sensiblement inférieure à une surface du fond (15b) de l'évidement.

4. Balancier (10) selon l'une quelconque des revendications 1 et 2, **caractérisé en ce que** l'évidement (15) s'étend selon une direction (18) formant avec l'axe central (17a) de l'ouverture (15a) un angle ($\alpha$) aigu.

5. Balancier (10) selon l'une quelconque des revendications 1, 2 et 3, **caractérisé en ce que** l'évidement (15) présente une section transversale verticale de forme essentiellement rectangulaire, carrée, circulaire, ou encore trapézoïdale.

6. Balancier (10) selon l'une quelconque des revendications 1 à 2 et 4, **caractérisé en ce que** l'évidement (15) comprend une paroi interne (15c) pourvue d'un renflement (19) s'étendant sensiblement horizontalement ou horizontalement en tout ou partie sur une portion d'une surface de ladite paroi (15c).

7. Balancier selon l'une quelconque des revendications précédentes, **caractérisé en ce qu'**il comprend une serge (11), un moyeu (12) destiné à être monté pivotant sur un axe de balancier (16), et au moins un bras (13) reliant la serge (11) au moyeu (12), la serge (11) du balancier (16) comportant ledit au moins un évidement (15).

8. Balancier (10) selon l'une quelconque des revendications précédentes, **caractérisé en ce qu'**il comprend plusieurs bras (13) dont au moins un comprend ledit au moins un évidement.

9. Balancier (10) selon la revendication 8, **caractérisé en ce que** plusieurs évidements (15) sont répartis de manière régulière ou irrégulière sur le pourtour de la serge (11).

10. Balancier (10) selon l'une quelconque des revendications 7 et 9, **caractérisé en ce qu'**au moins trois évidements (15) sont repartis régulièrement sur le pourtour de la serge (11), chaque évidement (15) s'étendant selon un arc de cercle d'un angle variant entre 20° et 90°, de préférence entre 40° et 60°.

11. Procédé de réglage de la marche d'une pièce d'horlogerie (100) comprenant un balancier (10) selon l'une quelconque des revendications précédentes, le procédé comportant les étapes suivantes :

    - mesure (21) de la marche de la pièce d'horlogerie ;
    - détermination (22) d'une valeur de correction à appliquer à l'inertie et/ou au balourd du balancier (10) pour obtenir une marche corrigée de ladite pièce d'horlogerie (100), et
    - application (23) d'une matière dans un ou plusieurs évidements agencés sur le balancier (10) afin de modifier l'inertie du balancier (10) selon ladite valeur de correction.

12. Procédé selon la revendication précédente, **caractérisé en ce que** l'étape d'application comprend une sous-étape de projection (24) de la matière dans un ou plusieurs de ces évidements.

13. Procédé selon la revendication précédente, **caractérisé en ce que** la sous-étape de projection (24) comprend une phase de projection (26) sélective de la matière dans un ou plusieurs de ces évidements (15).

14. Procédé selon l'une quelconque des revendications 12 et 13, **caractérisé en ce que** lors de la sous-étape de projection (24) un ou plusieurs types de matière sont projetés sur le balancier (10).

15. Procédé selon l'une quelconque des revendications 11 à 13, **caractérisé en ce qu'**il comprend une étape d'agencement (20) d'un mouvement horloger (110) comprenant le balancier (10) dans une carrure d'une boîte de la pièce d'horlogerie (100).

16. Pièce d'horlogerie (100) comportant un balancier (10) selon l'une quelconque des revendications 1 à 10.

## Patentansprüche

1. Unruh (10) eines Uhrmachereistücks (100), die eine Einstellfläche (14) umfasst, die mit mindestens einer Aussparung (15) versehen ist, die dazu vorgesehen ist, einen projizierten Werkstoff für eine Durchführung einer Einstellung des Gangs der Uhr (100) durch die Modifikation der Trägheit und der Unwucht der Unruh (10) aufzunehmen, wobei die Aussparung (15) eine Öffnung (15a) und einen Boden (15b) umfasst, **dadurch gekennzeichnet, dass** der Boden (15b) höchstens teilweise von einer Position aus, die über der Öffnung (15a) definiert ist, sichtbar ist.

2. Unruh (10) nach Anspruch 1, **dadurch gekennzeichnet, dass** die Öffnung (15a) in der Einstellfläche (14) in Bezug zum Boden (15b) der Aussparung (15) konfiguriert ist, wodurch der Boden (15b) von dieser Position aus höchstens teilweise sichtbar ist.

3. Unruh (10) nach einem der Ansprüche 1 und 2, **dadurch gekennzeichnet, dass** die Öffnung (15a) einen Rand umfasst, der eine Oberfläche definiert, die kleiner oder im Wesentlichen kleiner als eine Oberfläche des Bodens (15b) der Aussparung ist.

4. Unruh (10) nach einem der Ansprüche 1 und 2, **dadurch gekennzeichnet, dass** sich die Aussparung (15) entlang einer Richtung (18) erstreckt, die mit der Mittelachse (17a) der Öffnung (15a) einen spitzen Winkel (α) bildet.

5. Unruh (10) nach einem der Ansprüche 1, 2 und 3, **dadurch gekennzeichnet, dass** die Aussparung (15) einen vertikalen Querschnitt von im Wesentlichen rechteckiger, quadratischer, kreisförmiger oder auch trapezförmiger Form aufweist.

6. Unruh (10) nach einem der Ansprüche 1 bis 2 und 4, **dadurch gekennzeichnet, dass** die Aussparung (15) eine Innenwand (15c) umfasst, die mit einer Verdickung (19) versehen ist, die sich im Wesentlichen horizontal oder horizontal ganz oder teilweise auf einem Abschnitt einer Oberfläche der Wand (15c) erstreckt.

7. Unruh nach einem der vorstehenden Ansprüche, **dadurch gekennzeichnet, dass** sie einen Fusskreis (11), eine Nabe (12), die dazu bestimmt ist, drehbar auf einer Unruhachse (16) montiert zu werden, und mindestens einen Arm (13), der den Fusskreis (11) mit der Nabe (12) verbindet, umfasst, wobei der Fusskreis (11) der Unruh (16) die mindestens eine Aussparung (15) beinhaltet.

8. Unruh (10) nach einem der vorstehenden Ansprüche, **dadurch gekennzeichnet, dass** sie mehrere Arme (13) umfasst, von denen mindestens einer die mindestens eine Aussparung umfasst.

9. Unruh (10) nach Anspruch 8, **dadurch gekennzeichnet, dass** mehrere Aussparungen (15) gleichmäßig oder unregelmäßig über den Umfang des Fusskreises (11) verteilt sind.

10. Unruh (10) nach einem der Ansprüche 7 und 9, **dadurch gekennzeichnet, dass** mindestens drei Aussparungen (15) gleichmäßig über den Umfang des Fusskreises (11) verteilt sind, wobei sich jede Aussparung (15) entlang eines Kreisbogens in einem Winkel zwischen 20° und 90°, vorzugsweise zwischen 40° und 60°, erstreckt.

11. Verfahren zum Einstellen des Gangs eines Uhrmachereistücks (100), das eine Unruh (10) nach einem der vorstehenden Ansprüche umfasst, wobei das Verfahren die folgenden Schritte beinhaltet:

   - Messen (21) des Gangs des Uhrmachereistücks;
   - Bestimmen (22) eines Korrekturwerts, der auf die Trägheit und/oder die Unwucht der Unruh (10) anzuwenden ist, um einen korrigierten Gang des Uhrmachereistücks (100) zu erhalten, und
   - Einbringen (23) eines Werkstoffs in eine oder mehrere Vertiefungen, die an der Unruh (10) angeordnet sind, um die Trägheit der Unruh (10) gemäß dem Korrekturwert zu ändern.

12. Verfahren nach dem vorstehenden Anspruch, **dadurch gekennzeichnet, dass** der Schritt des Einbringens einen Teilschritt des Projizierens (24) des Werkstoffs in eine oder mehrere dieser Aussparungen umfasst.

13. Verfahren nach dem vorstehenden Anspruch, **dadurch gekennzeichnet, dass** der Projektionsteilschritt (24) eine selektive Projektionsphase (26) des Werkstoffs in eine oder mehrere dieser Aussparungen (15) umfasst.

14. Verfahren nach einem der Ansprüche 12 und 13, **dadurch gekennzeichnet, dass** beim Projektionsteilschritt (24) ein oder mehrere Werkstofftypen auf die Unruh (10) projiziert werden.

15. Verfahren nach einem der Ansprüche 11 bis 13, **dadurch gekennzeichnet, dass** es einen Anordnungsschritt (20) eines Uhrwerks (110), das die Unruh (10) umfasst, in einem Mittelteil eines Gehäuses des Uhrmachereistücks (100) umfasst.

16. Uhrmachereistück (100), das eine Unruh (10) nach einem der Ansprüche 1 bis 10 beinhaltet.

**Claims**

1. Balance (10) of a timepiece (100) comprising an adjustment face (14) provided with at least one recess (15) intended to receive a projected material for adjusting the rate of said timepiece (100) by modifying the inertia and the unbalance of the balance (10), said recess (15) comprising an opening (15a) and a bottom (15b), **characterised in that** said bottom (15b) is at most partially visible from a defined position above said opening (15a).

2. Balance (10) according to claim 1, **characterised in that** the opening (15a) is configured in the adjustment face (14) relative to the bottom (15b) of said recess (15) making said bottom (15b) at most partially visible from said position.

3. Balance (10) according to any one of claims 1 and 2, **characterised in that** the opening (15a) comprises an edge defining a surface area which is smaller than or substantially smaller than a surface area of the bottom (15b) of the recess.

4. Balance (10) according to any one of claims 1 and 2, **characterised in that** the recess (15) extends in a direction (18) forming an acute angle ($\alpha$) with the central axis (17a) of the opening (15a).

5. Balance (10) according to any one of claims 1, 2 and 3, **characterised in that** the recess (15) has a vertical cross-section of essentially rectangular, square, circular or trapezoidal shape.

6. Balance (10) according to any one of claims 1 to 2 and 4, **characterised in that** the recess (15) comprises an internal wall (15c) provided with a bulge (19) extending substantially horizontally or horizontally in whole or in part over a portion of a surface of said wall (15c).

7. Balance according to any one of the preceding claims, **characterised in that** it comprises a felloe (11), a hub (12) intended to be mounted so as to pivot about a balance staff (16), and at least one arm (13) connecting the felloe (11) to the hub (12), the felloe (11) of the balance (16) comprising said at least one recess (15).

8. Balance (10) according to any one of the preceding claims, **characterised in that** it comprises a plurality of arms (13), at least one whereof comprises said at least one recess.

9. Balance (10) according to claim 8, **characterised in that** a plurality of recesses (15) are distributed in an even or uneven manner around the periphery of the felloe (11).

10. Balance (10) according to any one of claims 7 and 9, **characterised in that** at least three recesses (15) are evenly distributed around the periphery of the felloe (11), each recess (15) extending along an arc of a circle at an angle varying between 20° and 90°, preferably between 40° and 60°.

11. Method for adjusting the rate of a timepiece (100) comprising a balance (10) according to any one of the preceding claims, the method comprising the following steps of:

    - measuring (21) the rate of the timepiece;
    - determining (22) a correction value to be applied to the inertia and/or unbalance of the balance (10) to obtain a corrected rate for said timepiece (100), and
    - applying (23) a material in one or more recesses arranged in the balance (10) in order to modify the inertia of the balance (10) according to said correction value.

12. Method according to the preceding claim, **characterised in that** the application step comprises a sub-step (24) of projecting material into one or more of these recesses.

13. Method according to the preceding claim, **characterised in that** the projection sub-step (24) comprises a phase (26) of selectively projecting material into one or more of these recesses (15).

14. Method according to any one of claims 12 and 13, **characterised in that** during the projection sub-step (24), one or more types of material are projected onto the balance (10).

15. Method according to any one of claims 11 to 13, **characterised in that** it comprises a step of arranging (20) a horological movement (110) comprising the balance (10) in a middle of a case of the timepiece (100).

16. Timepiece (100) comprising a balance (10) according to any one of claims 1 to 10.

Fig. 1

Fig. 2

Fig. 3

Fig. 4

Fig. 5

Fig. 6

Fig. 7

## Fig. 8

15a  15b  15c  14a,14b,14

19

15

## Fig. 9

15a  14a,14b,14

15c

15b

15

## Fig. 10

15a  14a,14b,14

15c

15b

15

## Fig. 11

10  100  110  120

## Fig. 12

| 20 | → | 21 | → | 22 | → | 23 | → | 24 | → | 25 |

## Fig. 13

14

15

14

16

13

11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018015071 A1